(19) Europäisches Patentamt
European Patent Office
Office européen des brevets

(11) **EP 2 714 391 B1**

(12) **EUROPÄISCHE PATENTSCHRIFT**

(45) Veröffentlichungstag und Bekanntmachung des Hinweises auf die Patenterteilung:
**01.04.2015 Patentblatt 2015/14**

(21) Anmeldenummer: **12723503.4**

(22) Anmeldetag: **25.05.2012**

(51) Int Cl.:
*B32B 27/10* (2006.01)   *B32B 27/30* (2006.01)
*B65D 65/40* (2006.01)   *B65D 65/42* (2006.01)
*D21H 19/20* (2006.01)   *D21H 19/22* (2006.01)
*D21H 27/10* (2006.01)

(86) Internationale Anmeldenummer:
**PCT/EP2012/059821**

(87) Internationale Veröffentlichungsnummer:
**WO 2012/163821 (06.12.2012 Gazette 2012/49)**

(54) **PAPIER- UND KARTONVERPACKUNGEN MIT EINER BARRIEREBESCHICHTUNG AUS EINER POLYMERMISCHUNG**

PAPER AND CARDBOARD PACKAGING FEATURING A BARRIER COATING COMPRISING A POLYMER MIXTURE

EMBALLAGES EN PAPIER ET EN CARTON MUNIS D'UN REVÊTEMENT BARRIÈRE CONSTITUÉ D'UN MÉLANGE DE POLYMÈRES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.05.2011 EP 11168090**

(43) Veröffentlichungstag der Anmeldung:
**09.04.2014 Patentblatt 2014/15**

(73) Patentinhaber: **BASF SE**
**67056 Ludwigshafen (DE)**

(72) Erfinder:
• **SEYFFER, Hermann**
**69123 Heidelberg (DE)**

• **CIMPEANU, Carmen-Elena**
**67059 Ludwigshafen (DE)**
• **DIEHL, Heiko**
**68259 Mannheim (DE)**

(74) Vertreter: **Upschulte, Manfred Alois**
**BASF Schweiz AG**
**IP Department**
**Postfach**
**4002 Basel (CH)**

(56) Entgegenhaltungen:
**EP-A1- 1 884 594    DE-A1- 4 445 193**
**GB-A- 2 433 450    US-A- 5 728 249**
**US-A- 5 763 100**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft eine Papier- oder Kartonverpackung aus mineralölbelastetem, recyceltem Papier mit einer Barriereschicht, welche herstellbar ist durch Auftragen einer wässrigen Polymerdispersion enthaltend eine Polymermischung aus bestimmten Polymeren mit unterschiedlichen Glasübergangstemperaturen, wobei der aus den Glasübergangstemperaturen der einzelnen Polymere berechnete Mittelwert im Bereich von +10 bis +45 °C liegt. Die Barriereschicht kann sich auf einer der Verpackungsoberflächen befinden oder eine von mehreren Schichten einer mehrschichtigen Verpackungsbeschichtung bilden oder sich als Beschichtung auf einer Seite eines in der Verpackung befindlichen Innenbeutels befinden.

Kartonverpackungen werden in der Regel aus recyceltem Papier hergestellt. Im Falle von bedrucktem Papier, insbesondere von Zeitungspapier, kann das recycelte Papier Mineralölrückstände aus den für den Zeitungsdruck üblicherweise verwendeten Druckfarben enthalten. Bereits bei Zimmertemperatur verdunsten flüchtige Anteile dieser Rückstände und schlagen sich im Fall von Lebensmittelverpackungen auf den in der Schachtel verpackten Lebensmitteln wie z.B. Nudeln, Gries, Reis oder Cornflakes nieder. Auch die meisten der heute verwendeten Innenbeutel aus Polymerfolien bieten dabei keinen ausreichenden Schutz. In Studien des Kantonalen Labors Zürich wurden Mineralölrückstände in erheblicher Höhe in Lebensmitteln nachgewiesen, die in Verpackungen aus recyceltem Papier verpackt waren. Bei den flüchtigen Mineralölbestandteilen handelt es sich überwiegend um gesundheitlich bedenkliche paraffin- und naphtenartige Kohlenwasserstoffe und um aromatische Kohlenwasserstoffe, insbesondere solche mit 15-25 C-Atomen.

Es besteht daher ein Bedarf, das Risiko einer Kontamination von Lebensmitteln mit Mineralölrückständen zu verringern. Eine Möglichkeit wäre, auf Recycling von Zeitungspapier bei der Herstellung von Kartonagen für die Verpackung von Lebensmitteln zu verzichten. Dies ist aus ökologischen Gründen nicht wünschenswert und wegen nicht ausreichend zur Verfügung stehenden Mengen an Frischzellulose nicht praktikabel. Eine andere Lösung wäre, auf Mineralöle in den Druckfarben für Zeitungsdruck zu verzichten. Dies stößt aber auf technologische Hindernisse, vor allem bezüglich der Abwischbeständigkeit des Drucks auf der Papieroberfläche. Im Verpackungsbereich sind Barrierebeschichtungen gegen Fette und Öle bekannt. In der WO 2006/053849 werden beispielsweise Beschichtungen auf Basis von wasserbasierten Polymerzusammensetzungen für Papier und Karton beschrieben. Die Polymere zeigen zwar gute Barriereeigenschaften gegen flüssige fettige Substanzen. Es hat sich aber gezeigt, dass hierdurch nicht notwendigerweise auch eine gute Barrierewirkung gegenüber gasförmig durchtretenden Stoffen gegeben ist, da es sich um unterschiedliche Transportmechanismen für die durchtretenden Stoffe handelt. Bei flüssigen Fetten und Ölen erfolgt der Transport über die Fasern, wobei Kapillarkräfte und Oberflächenbenetzung eine Rolle spielen. Bei Problemen mit gasförmig übertretenden Stoffen spielen Kapillarwirkung und Benetzung keine Rolle sondern Sorption, Diffusion und Porosität. Außerdem unterscheiden sich Fette und Öle von Kohlenwasserstoffen, d.h. von Mineralölbestandteilen in ihrer Polarität und dadurch in ihrem Diffusionsverhalten durch Barriereschichten.

Der Erfindung liegt die Aufgabe zugrunde, Verpackungen zur Verfügung zu stellen, welche trotz Verwendung von mineralölbelastetem, recycelten Papier das Risiko einer Kontamination des Verpackungsguts mit flüchtigen Mineralölbestandteilen verringern.

Die Aufgabe wird erfindungsgemäß gelöst durch eine Verpackung aus Papier oder Karton, wobei die Verpackung zumindest zum Teil aus mineralölbelastetem, recyceltem Papier hergestellt ist und wobei die Verpackung mindestens eine Barriereschicht aufweist, welche herstellbar ist durch Auftragen einer wässrigen Polymerdispersion enthaltend eine Mischung aus mindestens zwei Polymeren A und B, wobei Polymer A ein Copolymer ist, welches herstellbar ist durch Emulsionspolymerisation aus

(a) einem oder mehreren Hauptmonomeren, welche ausgewählt sind aus der Gruppe bestehend aus C1- bis C4-Alkyl(meth)acrylaten,

(b) 0,1 bis 5 Gew.% eines oder mehreren Säuremonomeren,

(c) 0-20 Gew.% Acrylnitril und

(d) 0 bis 10 Gew.% weiteren, von den Monomeren (a) bis (c) verschiedenen Monomeren, wobei die Glasübergangstemperatur des Polymers A größer als +45 °C ist,

und wobei die Glasübergangstemperatur von Polymer B kleiner als +10 °C ist, wobei der aus den Glasübergangstemperaturen der einzelnen Polymere berechnete Mittelwert im Bereich von +10 bis +45 °C liegt, wobei sich die Barriereschicht auf mindestens einer der Verpackungsoberflächen befinden kann oder die Barriereschicht mindestens eine von mehreren Schichten einer mehrschichtigen Verpackungsbeschichtung bilden kann oder sich die Barriereschicht als Beschichtung auf mindestens einer Seite eines in der Verpackung befindlichen Innenbeutels befinden kann. Die Verpackungen eignen sich insbesondere für Lebensmittel.

Die Glasübergangstemperatur der einzelnen Polymere lässt sich bestimmen durch Differential Scanning Calorimetrie (ASTM D 3418-08, sogenannte "midpoint temperature"). Die Berechnung des Mittelwertes der Glasübergangstemperatur der erfindungsgemäß einzusetzenden Polymermischung kann mit Hilfe der sogenannten Foxgleichung erfolgen. Nach Fox (T.G. Fox, Bull. Am. Phys. Soc. 1956 [Ser. II] 1, Seite 123 und gemäß Ullmann's Encyclopädie der technischen Chemie, Bd. 19, Seite 18, 4. Auflage, Verlag Chemie, Weinheim, 1980) gilt für die Glasübergangstemperatur von höchstens schwach vernetzten Mischpolymerisaten in guter Näherung:

$$1/T_g = x^1/T_g^1 + x^2/T_g^2 + \ldots x^n/T_g^n,$$

wobei $x^1$, $x^2$, .... $x^n$ die Massenbrüche der die Polymere A und B aufbauenden Monomeren 1, 2, .... n und $T_g^1$, $T_g^2$, .... $T_g^n$ die Glasübergangstemperaturen der jeweils nur aus einem der Monomeren 1, 2, .... n aufgebauten Homopolymerisaten in Grad Kelvin bedeuten. Die Massenbrüche beziehen sich dabei auf die Summe aller Monomere, aus denen die Polymere A und B der Polymermischung aufgebaut sind.

Die $T_g$-Werte für die Homopolymerisate der meisten Monomere sind bekannt und z.B. in Ullmann's Ecyclopedia of Industrial Chemistry, Bd. 5, Vol. A21, Seite 169, VCH Weinheim, 1992, aufgeführt; weitere Quellen für Glasübergangstemperaturen von Homopolymerisaten bilden z.B. J. Brandrup, E.H. Immergut, Polymer Handbook, 1st Ed., J. Wiley, New York 1966, 2nd Ed. J.Wiley, New York 1975, und 3rd Ed. J. Wiley, New York 1989).

Mineralölbelastet bedeutet, dass das Papier durch übliche Analysemethoden nachweisbare Mengen an flüchtigen Kohlenwasserstoffen enthält, insbesondere flüchtige Paraffine, flüchtige Naphtene und/oder flüchtige aromatische Kohlenwasserstoffe mit bis zu 25 C-Atomen. Flüchtige Kohlenwasserstoffe sind solche mit bis zu 25 C-Atomen, z.B. von 5 bis 22 C-Atomen. In einer Ausführungsform der Erfindung stammt die Mineralölbelastung aus Druckfarben und umfasst flüchtige Paraffine, flüchtige Naphtene und/oder flüchtige aromatische Kohlenwasserstoffe.

Im Folgenden wird die Bezeichnung "(Meth)acryl..." und ähnliche Bezeichnungen als abkürzende Schreibweise verwendet für "Acryl... oder Methacryl...".

Bei den erfindungsgemäß zu verwendenden Polymerdispersionen handelt es sich um Dispersionen von Polymeren in wässrigem Medium. Hierbei kann es sich z.B. um vollständig entsalztes Wasser handeln oder auch um Mischungen aus Wasser und einem damit mischbaren Lösemittel wie Methanol, Ethanol oder Tetrahydrofuran. Vorzugsweise werden keine organischen Lösungsmittel eingesetzt. Die Feststoffgehalte der Dispersionen betragen vorzugsweise von 15 bis 75 Gew.-%, bevorzugt von 40 bis 60 Gew.-%, insbesondere größer 50 Gew.%. Der Feststoffgehalt kann z.B. durch entsprechende Einstellung der bei der Emulsionspolymerisation eingesetzten Wassermenge und/oder der Monomermengen erfolgen. Die mittlere Teilchengröße der in der wässrigen Dispersion dispergierten Polymerteilchen ist vorzugsweise kleiner 400 nm, insbesondere kleiner 300 nm. Besonders bevorzugt liegt die mittlere Teilchengröße zwischen 70 und 250 nm oder zwischen 80 und 150 nm. Unter mittlerer Teilchengröße wird hier der $d_{50}$-Wert der Teilchengrößenverteilung verstanden, d.h. 50 Gew.-% der Gesamtmasse aller Teilchen haben einen kleineren Teilchendurchmesser als der $d_{50}$-Wert. Die Teilchengrößenverteilung kann in bekannter Weise mit der analytischen Ultrazentrifuge (W. Mächtle, Makromolekulare Chemie 185 (1984), Seite 1025 -1039) bestimmt werden. Der pH-Wert der Polymerdispersion wird vorzugsweise auf pH größer 4 insbesondere auf einen pH-Wert zwischen 5 und 9 eingestellt.

Die erfindungsgemäß zu verwendenden Copolymere A sind durch Emulsionspolymerisation von radikalisch polymerisierbaren Monomeren herstellbare Emulsionspolymerisate. Das Copolymer A wird gebildet aus einem oder mehreren Hauptmonomeren (a), welche ausgewählt sind aus der Gruppe bestehend aus C1- bis C4-Alkyl(meth)acrylaten. Die Hauptmonomeren (a) werden vorzugsweise zu mindestens 70 Gew.-%, bevorzugt zu mindestens 75 Gew.-%, z.B. von 79,5 bis 99,5 Gew.%, bezogen auf die Summe aller Monomere eingesetzt. Hauptmonomere (a) sind z.B. Methylacrylat, Methylmethacrylat, Ethylacrylat und n-Butylacrylat. Besonders bevorzugte Hauptmonomere (a) sind Methylacrylat, Methylmethacrylat und deren Gemisch.

Das Copolymer A wird gebildet aus einem oder mehreren Säuremonomeren (b). Säuremonomere sind ethylenisch ungesättigte, radikalisch polymerisierbare Monomere, welche mindestens eine Säuregruppe aufweisen, z.B. Monomere mit Carbonsäure, Sulfonsäure oder Phosphonsäuregruppen. Bevorzugt sind Carbonsäuregruppen. Genannt seien z. B. Acrylsäure, Methacrylsäure, Itaconsäure, Maleinsäure oder Fumarsäure. Vorzugsweise sind die Säuremonomere (b) ausgewählt aus Acrylsäure und Methacrylsäure. Die Säuremonomere (b) werden zu 0,1 bis 5 Gew.%, bevorzugt zu 0,5 bis 5 Gew.%, bezogen auf die Summe aller Monomere eingesetzt.

Das Copolymer A kann optional als weiterem Monomer (c) zu 0 bis 20 Gew.%, bezogen auf die Summe aller Monomere, aus Acrylnitril gebildet sein. In einer Ausführungsform der Erfindung wird das Copolymer A zu 1-20 Gew.%, vorzugsweise 2-20 Gew.% aus Acrylnitril gebildet.

Das Copolymer A kann optional aus weiteren, von den Monomeren (a) bis (c) verschiedenen Monomeren (d) gebildet sein. Die Menge an weiteren Monomeren (d) beträgt dabei 0 bis 10 Gew.% oder 0 bis 5 Gew.%, bezogen auf die Summe aller Monomere. In einer Ausführungsform werden 0,1 bis 10 Gew.% oder 0,1 bis 5 Gew.% weitere Monomere (d) eingesetzt. In einer anderen Ausführungsform werden keinen weiteren, von den Monomeren (a) bis (c) verschiedenen Monomeren eingesetzt.

Die weiteren Monomere (d) können ausgewählt sein aus der Gruppe bestehend aus $C_5$-$C_{20}$-Alkyl(meth)acryla-

ten, Vinylestern von bis zu 20 C-Atome enthaltenden Carbonsäuren, Vinylaromaten mit bis zu 20 C-Atomen, von Acrylnitril verschiedenen ethylenisch ungesättigten Nitrilen, Vinylhalogeniden, Vinylethern von 1 bis 10 C-Atome enthaltenden Alkoholen, aliphatischen Kohlenwasserstoffen mit 2 bis 8 C-Atomen und ein oder zwei Doppelbindungen oder Mischungen dieser Monomeren. Zu nennen sind z.B. (Meth)acrylsäurealkylester mit einem $C_5$-$C_{10}$-Alkylrest, wie 2-Ethylhexylacrylat. Insbesondere sind auch Mischungen der (Meth)acrylsäurealkylester geeignet. Vinylester von Carbonsäuren mit 1 bis 20 C-Atomen sind z. B. Vinyllaurat, Vinylstearat, Vinylpropionat, Versaticsäurevinylester und Vinylacetat. Als vinylaromatische Verbindungen kommen Vinyltoluol, a- und p-Methylstyrol, alpha-Butylstyrol, 4-n-Butylstyrol, 4-n-Decylstyrol und vorzugsweise Styrol in Betracht. Beispiel für Nitrile ist Methacrylnitril. Die Vinylhalogenide sind mit Chlor, Fluor oder Brom substituierte ethylenisch ungesättigte Verbindungen, bevorzugt Vinylchlorid und Vinylidenchlorid. Als Vinylether zu nennen sind z. B. Vinylmethylether oder Vinylisobutylether. Bevorzugt wird Vinylether von 1 bis 4 C-Atome enthaltenden Alkoholen. Als Kohlenwasserstoffe mit 4 bis 8 C-Atomen und zwei olefinischen Doppelbindungen seien Butadien, Isopren und Chloropren genannt. Als weitere Monomere (d) bevorzugt sind die $C_5$- bis $C_{10}$-Alkylacrylate und -methacrylate und Vinylaromaten, insbesondere Styrol und deren Mischungen. Ganz besonders bevorzugt sind n-Hexylacrylat, Octylacrylat und 2-Ethylhexylacrylat, 2-Propylheptylacrylat, Styrol sowie Mischungen dieser Monomere. Weitere Monomere (d) sind z. B. auch Hydroxylgruppen enthaltende Monomere, insbesondere $C_1$-$C_{10}$-Hydroxyalkyl(meth)acrylate sowie (Meth)acrylamid. Als weitere Monomere (d) seien darüber hinaus Phenyloxyethylglykolmono-(meth-)acrylat, Glycidylacrylat, Glycidylmethacrylat, Amino-(meth-)acrylate wie 2-Aminoethyl-(meth)acrylat genannt. Als weitere Monomere (d) seien auch vernetzende Monomere genannt.

In einer Ausführungsform der Erfindung ist das Copolymer A herstellbar aus

(a) 79,5 bis 99,5 Gew.% eines oder mehreren Hauptmonomeren, welche ausgewählt sind aus der Gruppe bestehend aus C1- bis C4-Alkyl(meth)acrylaten,
(b) 0,5 bis 5 Gew.% eines oder mehreren Säuremonomeren ausgewählt aus Acrylsäure und Methacrylsäure,
(c) 0-20 Gew.% Acrylnitril und

keinen weiteren, von den Monomeren (a) bis (c) verschiedenen Monomeren.

Art und Mengen der Monomere des Copolymers A sind so angepasst, dass die Glasübergangstemperatur des Emulsionspolymerisats größer 45 °C beträgt und vorzugsweise im Bereich von 46 bis 80 °C liegt.

Die erfindungsgemäß zu verwendenden Polymere B können durch Emulsionspolymerisation von radikalisch polymerisierbaren Monomeren herstellbare Emulsionspolymerisate sein. Das Polymer B kann aus sogenannten Hauptmonomeren gebildet sein, ausgewählt aus $C_1$ bis $C_{20}$-Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C Atome enthaltenden Alkoholen, aliphatischen Kohlenwasserstoffen mit 2 bis 8 C Atomen und ein oder zwei Doppelbindungen oder Mischungen dieser Monomeren. Zu nennen sind z. B. (Meth)acrylsäurealkylester mit einem $C_1$-$C_{10}$-Alkylrest, wie Methylmethacrylat, Methylacrylat, n-Butylacrylat, Ethylacrylat, Isopropylheptylacrylat und 2-Ethylhexylacrylat. Insbesondere sind auch Mischungen der (Meth)acrylsäurealkylester geeignet. Vinylester von Carbonsäuren mit 1 bis 20 C-Atomen sind z. B. Vinyllaurat, -stearat, Vinylpropionat, Versaticsäurevinylester und Vinylacetat. Als vinylaromatische Verbindungen kommen Vinyltoluol, $\alpha$- und p-Methylstyrol, $\alpha$-Butylstyrol, 4-n-Butylstyrol, 4-n-Decylstyrol und vorzugsweise Styrol in Betracht. Beispiele für Nitrile sind Acrylnitril und Methacrylnitril. Die Vinylhalogenide sind mit Chlor, Fluor oder Brom substituierte ethylenisch ungesättigte Verbindungen, bevorzugt Vinylchlorid und Vinylidenchlorid. Als Vinylether zu nennen sind z. B. Vinylmethylether oder Vinylisobutylether. Bevorzugt wird Vinylether von 1 bis 4 C-Atome enthaltenden Alkoholen. Als Kohlenwasserstoffe mit 2 bis 8 C-Atomen und ein oder zwei olefinischen Doppelbindungen seien Ethylen, Propylen, Butadien, Isopren und Chloropren genannt. Als Hauptmonomere bevorzugt sind insbesondere $C_1$- bis $C_8$-Alkylacrylate, C1 bis C8 Alkylmethacrylate, Vinylaromaten, insbesondere Styrol, und deren Mischungen. Ganz besonders bevorzugt sind Methylacrylat, Methylmethacrylat, Ethylacrylat, n-Butylacrylat, n-Hexylacrylat, Octylacrylat und 2-Etyhlhexylacrylat, Styrol sowie Mischungen dieser Monomere. Vorzugsweise handelt es sich bei dem Polymer um ein Polyacrylat. Unter Polyacrylat soll ein Polymer verstanden werden, welches insgesamt zu mindestens 50 Gew.-%, vorzugsweise zu mindestens 70 Gew.-% aus $C_1$ bis $C_{20}$ Alkyl(meth)acrylaten aufgebaut ist (alle Gewichtsangaben sind auf das Polymer bezogen).

Neben den vorstehenden Hauptmonomeren kann das Polymer weitere Monomere enthalten. In Betracht kommen z. B. Monomere mit Hydroxygruppen, insbesondere Hydroxyalkyl(meth)acrylate, (Meth)acrylamid oder Glycidyl(meth)acrylat; genannt seien auch vernetzende Monomere mit mindestens zwei reaktiven Gruppen, vorzugsweise ethylenisch ungesättigten, polymerisierbaren Gruppen, z. B. Allyl(meth)acrylat, Diacrylate, wie Butandioldiacrylat. Insbesondere erwähnt seien Monomere mit Säuregruppen oder Säureanhydridgruppen (kurz Säure-Monomere) z. B. Monomere mit Carbonsäure, Sulfonsäure oder Phosphonsäuregruppen. Bevorzugt sind Carbonsäuregruppen oder deren Anhydride. Genannt seien z. B. Acrylsäure, Methacrylsäure, Itaconsäure, Maleinsäure, Maleinsäureanhydrid oder Fumarsäure. Insbesondere kann das Polymer Säure-Monomere in Mengen von 0,1 bis 10, besonders bevorzugt 0,1 bis 5, ganz besonders bevorzugt 0,2 bis 3 Gew.-%, bezogen auf das Polymer enthalten.

Bevorzugte Polymere B sind Polyacrylate, aufgebaut aus

(a) 50 bis 90 Gew.%, vorzugsweise 70 bis 90 Gew.% Acrylatmonomeren, welche ausgewählt sind aus der Gruppe bestehend aus C1- bis C20-Alkyl(meth)acrylaten, vorzugsweise C1-bis C10-Alkyl(meth)acrylaten;
(b) 0,1 bis 10 Gew.%, vorzugsweise 1 bis 5 Gew.% eines oder mehreren Säuremonomeren, vorzugsweise Acrylsäure, Methacrylsäure oder deren Gemisch;
(c) 0 bis 20 Gew.%, vorzugsweise 5 bis 20 Gew.% Vinylaromaten, z.B. Styrol;
(d) 0 bis 20 Gew.%, vorzugsweise 5 bis 20 Gew.% (Meth)acrylnitril, vorzugsweise Acrylnitril und
(e) 0 bis 10 Gew.% weiteren, von den Monomeren (a) bis (d) verschiedenen Monomeren.

Bevorzugte Polymere B sind auch Polystyrolacrylate, aufgebaut aus

(a) 50 bis 90 Gew.%, vorzugsweise 70 bis 90 Gew.% Acrylatmonomeren, welche ausgewählt sind aus der Gruppe bestehend aus C1- bis C20-Alkyl(meth)acrylaten, vorzugsweise C1-bis C10-Alkyl(meth)acrylaten;
(b) 0,1 bis 10 Gew.%, vorzugsweise 1 bis 5 Gew.% eines oder mehreren Säuremonomeren, vorzugsweise Acrylsäure, Methacrylsäure oder deren Gemisch;
(c) 5 bis 20 Gew.% Styrol;
(d) 0 bis 20 Gew.%, vorzugsweise 5 bis 20 Gew.% (Meth)acrylnitril, vorzugsweise Acrylnitril und
(e) 0 bis 10 Gew.% weiteren, von den Monomeren (a) bis (d) verschiedenen Monomeren.

Art und Mengen der Monomere des Polymers B sind so angepasst, dass die Glasübergangstemperatur des Emulsionspolymerisats kleiner als +10 °C beträgt und vorzugsweise im Bereich von -10 bis 9 °C liegt.

Die Herstellung der Polymere A und B kann durch Emulsionspolymerisation erfolgen, es handelt sich dann um ein Emulsionspolymerisat. Bei der Emulsionspolymerisation werden in der Regel ionische und/oder nicht-ionische Emulgatoren und/oder Schutzkolloide bzw. Stabilisatoren als grenzflächenaktive Verbindungen verwendet, um die Dispergierung der Monomeren in dem wässrigen Medium zu unterstützen. Schutzkolloide sind polymere Verbindungen, die bei Solvatation große Mengen Wasser binden und in der Lage sind, Dispersionen von wasserunlöslichen Polymeren zu stabilisieren. Im Gegensatz zu Emulgatoren erniedrigen sie in der Regel die Grenzflächenspannung zwischen Polymerpartikeln und Wasser nicht. Eine ausführliche Beschreibung geeigneter Schutzkolloide findet man in Houben-Weyl, Methoden der organischen Chemie, Band XIV/1, Makromolekulare Stoffe, Georg-Thieme-Verlag, Stuttgart, 1961, Seiten 411 bis 420. Als Schutzkolloide in Betracht kommen z. B. amphiphile Polymere, also Polymere mit hydrophoben und hydrophilen Gruppen. Es kann sich um natürliche Polymere, wie Stärke oder um synthetische Polymere handeln. Als Emulgatoren kommen sowohl anionische als auch nichtionische grenzflächenaktive Stoffe in Betracht, deren zahlenmittleres Molekulargewicht üblicherweise unterhalb von 2000 g/mol oder vorzugsweise unterhalb von 1500 g/mol liegt, während das zahlenmittlere Molekulargewicht der Schutzkolloide oberhalb von 2000 g/mol liegt, beispielsweise von 2000 bis 100000 g/mol, insbesondere von 5000 bis 50000 g/mol. Vorzugsweise werden anionische und nichtionische Emulgatoren als grenz-flächenaktive Substanzen verwendet. Geeignete Emulgatoren sind beispielsweise ethoxylierte $C_8$- bis $C_{36}$-Fettalkohole mit einem Ethoxylierungsgrad von 3 bis 50, ethoxylierte Mono-, Di- und Tri- $C_4$- bis $C_{12}$-Alkylphenole mit einem Ethoxylierungsgrad von 3 bis 50, Alkalimetallsalze von Dialkylestern der Sulfobernsteinsäure, Alkalimetall- und Ammoniumsalze von $C_8$- bis $C_{12}$-Alkylsulfaten, Alkalimetall- und Ammoniumsalze von $C_{12}$- bis $C_{18}$-Alkylsulfonsäuren und Alkalimetall- und Ammoniumsalze von $C_9$- bis $C_{18}$-Alkylarylsulfonsäuren. Falls Emulgatoren und/oder Schutzkolloide als Hilfsmittel zum Dispergieren der Monomeren mit verwendet werden, betragen die davon verwendeten Mengen beispielsweise 0,1 bis 5 Gew.-%, bezogen auf die Monomeren. Handelsnamen von Emulgatoren sind z. B. Dowfax®2 A1, Emulan® NP 50, Dextrol® OC 50, Emulgator 825, Emulgator 825 S, Emulan® OG, Texapon® NSO, Nekanil® 904 S, Lumiten® I-RA, Lumiten® E 3065, Lumiten® ISC, Disponil ® NLS, Disponil LDBS 20, Disponil® FES 77, Lutensol AT 18, Steinapol VSL, Emulphor NPS 25. Die grenzflächenaktive Substanz wird üblicherweise in Mengen von 0,1 bis 10 Gew.-%, bezogen auf die zu polymerisierenden Monomeren verwendet.

Die Emulsionspolymerisation erfolgt in der Regel bei 30 bis 130, vorzugsweise 50 bis 90 °C. Das Polymerisationsmedium kann sowohl nur aus Wasser, als auch aus Mischungen aus Wasser und damit mischbaren Flüssigkeiten wie Methanol bestehen. Vorzugsweise wird nur Wasser verwendet. Die Emulsionspolymerisation kann sowohl als Batchprozess als auch in Form eines Zulaufverfahrens, einschließlich Stufen- oder Gradientenfahrweise, durchgeführt werden. Bevorzugt ist das Zulaufverfahren, bei dem man einen Teil des Polymerisationsansatzes vorlegt, auf die Polymerisationstemperatur erhitzt, anpolymerisiert und anschließend den Rest des Polymerisationsansatzes, üblicherweise über mehrere räumlich getrennte Zuläufe, von denen einer oder mehrere die Monomeren in reiner oder in emulgierter Form enthalten, kontinuierlich oder auch stufenweise zuführt.

Bei der Emulsionspolymerisation können die üblichen und bekannten Hilfsstoffe, wie z.B. wasserlösliche Initiatoren und Regler eingesetzt werden. Wasserlösliche Initiatoren für die Emulsionspolymerisation sind z.B. Ammonium- und Alkalimetallsalze der Peroxidischwefelsäure, z. B. Natriumperoxodisulfat, Wasserstoffperoxid oder organische Peroxide, z. B. tert-Butylhydroperoxid. Geeignet sind auch sogenannte Reduktions-Oxidations (Red-Ox)-Initiator Systeme. Die Red-Ox-Initiator-Systeme bestehen aus mindestens einem meist anorganischen Reduktionsmittel und einem anorganischen oder organischen Oxidationsmittel. Bei der Oxidationskomponente handelt es sich z. B. um die bereits vorstehend genannten Initiatoren für die Emulsionspolymerisation. Bei der Reduktionskomponenten handelt es sich z. B. um Alkalimetallsalze der schwefligen Säure, wie z. B. Natriumsulfit, Natriumhydrogensulfit, Alkalisalze der dischwefligen Säure wie Natriumdisulfit, Bisulfitadditionsverbindungen aliphatischer Aldehyde und Ketone, wie Acetonbisulfit oder Reduktionsmittel wie Hydroxymethansulfinsäure und deren Salze, oder Ascorbinsäure. Die Red-Ox-Initiator-Systeme können unter Mitverwendung löslicher Metallverbindungen, deren metallische Komponente in mehreren Wertigkeitsstufen auftreten kann, verwendet werden. Übliche Red-Ox-Initiator-Systeme sind z. B. Ascorbinsäure/Eisen(II)sulfat/Natriumperoxidisulfat, tert-Butylhydroperoxid/Natriumdisulfit, tert-Butylhydroperoxid/Na-Hydroxymethansulfinsäure oder tert-Butylhydroperoxid/Ascorbinsäure. Die einzelnen Komponenten, z. B. die Reduktionskomponente, können auch Mischungen sein z. B. eine Mischung aus dem Natriumsalz der Hydroxymethansulfinsäure und Natriumdisulfit. Die genannten Verbindungen werden meist in Form wässriger Lösungen eingesetzt, wobei die untere Konzentration durch die in der Dispersion vertretbare Wassermenge und die obere Konzentration durch die Löslichkeit der betreffenden Verbindung in Wasser bestimmt ist. Im Allgemeinen beträgt die Konzentration 0,1 bis 30 Gew.-%, bevorzugt 0,5 bis 20 Gew.-%, besonders bevorzugt 1,0 bis 10 Gew.-%, bezogen auf die Lösung. Die Menge der Initiatoren beträgt im Allgemeinen 0,1 bis 10 Gew.-%, bevorzugt 0,5 bis 5 Gew.-%, bezogen auf die zu polymerisierenden Monomeren. Es können auch mehrere, verschiedene Initiatoren bei der Emulsionspolymerisation Verwendung finden. Zur Entfernung der Restmonomeren wird üblicherweise auch nach dem Ende der eigentlichen Emulsionspolymerisation Initiator zugesetzt.

Bei der Polymerisation können Regler eingesetzt werden, z. B. in Mengen von 0 bis 0,8 Gew.-Teile, bezogen auf 100 Gew.-Teile der zu polymerisierenden Monomeren, wodurch die Molmasse verringert wird. Geeignet sind z. B. Verbindungen mit einer Thiolgruppe wie tert.-Butylmercaptan, Mercaptoethylpropionat, 2-Ethylhexylthioglykolat, Thioglycolsäureethylester, Mercaptoethanol, Mercaptopropyltrimethoxysilan, n-Dodecylmercaptan, oder tert.-Dodecylmercaptan. Weiterhin können Regler ohne Thiolgruppe verwendet werden, wie z.B. Terpinolen. In einer bevorzugten Ausführungsform ist das Emulsionspolymerisat hergestellt unter Verwendung von 0,05 bis 0,5 Gew.%, bezogen auf die Monomermenge, an mindestens einem Molekulargewichtsregler.

Die für die Beschichtung der Verpackungen eingesetzte Polymerdispersion kann für die erfindungsgemäße Verwendung allein aus den in Wasser dispergierten Emulsionspolymerisaten bestehen. Sie kann aber auch noch weitere Zusatzstoffe enthalten, z.B. Füllstoffe, Antiblockmittel, Farbstoffe, Verlaufsmittel oder Verdicker.

In einer Ausführungsform der Erfindung wird die Polymermischung der Polymere A und B in Kombination mit bis zu 1 Gew.-Teil an plättchenförmigen Pigmenten, bezogen auf 1 Gew.-Teil Polymere eingesetzt. Beispiele für plättchenförmige Pigmente sind Talkum, Ton oder Mica (Glimmer). Bevorzugt ist Talkum. Bevorzugte Formfaktoren (Verhältnis Länge zu Dicke) sind größer 10.

Die Polymerdispersion bildet nach Beschichtung des Substrats eine Barriereschicht. Eine Barriereschicht liegt insbesondere dann vor, wenn ein Copolymer verwendet wird, welches bewirkt, dass eine Beschichtung mit dem Copolymer eine Durchlässigkeit für gasförmiges n-Hexan von weniger als 50 g/m$^2$ d, vorzugsweise weniger als 10 g/m$^2$ d, besonders bevorzugt weniger als 5 g/m$^2$ d oder weniger als 1 g/m$^2$ d bei 23°C und einem Auftraggewicht von 20-25 g/m$^2$ auf Papier hat (siehe Messmethode in den unten beschriebenen Beispielen).

Der Gesamtgehalt an Polymeren in der zur Beschichtung eingesetzten Dispersion beträgt vorzugsweise mindestens 1 Gew.-%, insbesondere mindestens 5 Gew.-% und bis zu 60 oder bis zu 75 Gew.%. Vorzugsweise liegt der Gesamtgehalt an Polymeren in der wässrigen Dispersion bei 15 bis 75 Gew.-%, oder 40 bis 60 Gew.-%. Bevorzugte wässrige Polymerdispersionen haben bei pH-Werten von 4 und einer Temperatur von 20°C eine Viskosität von 10 bis 150 000 mPas, oder 200 bis 5000 mPas (gemessen mit einem Brookfield-Viskosimeter bei 20°C, 20 UpM, Spindel 4). Die mittlere Teilchengröße der in der wässrigen Dispersion dispergierten Polymerpartikel beträgt beispielsweise von 0,02 bis 100 $\mu$m, vorzugsweise 0,05 bis 10 $\mu$m. Sie kann z. B. mit Hilfe der optischen Mikroskopie, der Lichtstreuung oder der Gefrierbruchelektronenmikroskopie bestimmt werden.

Erfindungsgemäß werden die Trägersubstrate mit einer oben beschriebenen wässrigen Polymerdispersion beschichtet. Geeignete Substrate sind insbesondere Papier, Karton und Polymerfolien. Die zur Beschichtung eingesetzten Dispersionen können weitere Zusatz- oder Hilfsstoffe enthalten, z.B. Verdicker zur Einstellung der Rheologie, Benetzungshilfsmittel oder Bindemittel.

Die Anwendung kann beispielsweise auf Beschichtungsmaschinen in der Weise vorgenommen werden, dass man auf Papier, Karton oder auf eine Trägerfolie aus einem Kunststoff die Beschichtungszusammensetzung aufträgt. Sofern bahnförmige Materialien verwendet werden, wird die Polymerdispersion üblicherweise aus einer Wanne über eine Auftragswalze aufgetragen und mit Hilfe einer Luftbürste egalisiert. Andere Möglichkeiten, die Beschichtung aufzubringen, gelingen z.B. mit Hilfe des Reverse Gravure-Verfahrens, mit Sprühverfahren oder mit einem Rollrakel oder mit anderen, dem Fachmann bekannten Beschichtungsverfahren. Das Trägersubstrat ist dabei auf mindestens einer Seite beschichtet, d.h. es kann einseitig oder beidseitig beschichtet sein. Bevorzugte Auftrageverfahren für Papier und Karton sind Vorhangbeschichtung, Luftrakel, Stabstreichen oder Rakelstreichen. Bevorzugte Auftrageverfahren für Folienbeschichtung sind Rakel, Drahtrakel, Luftbürste, Gegenlaufwalzenauftragsverfahren, Gegenlaufgravurstreichen, Gießkopf oder Düse.

Die auf die flächigen Materialien aufgetragenen Mengen betragen vorzugsweise 1 bis 10 g (Polymer, fest) pro $m^2$, vorzugsweise 2 bis 7 g/$m^2$ bei Folien, bzw. vorzugsweise 5 bis 30 g/$m^2$ bei Papier oder Karton. Nach dem Aufbringen der Beschichtungszusammensetzungen auf die Trägersubstrate wird das Lösungsmittel bzw. Wasser verdampft. Hierfür kann man beispielsweise bei kontinuierlichem Arbeiten das Material durch einen Trocknerkanal führen, der mit einer Infrarot-Bestrahlungsvorrichtung ausgestattet sein kann. Danach wird das beschichtete und getrocknete Material über eine Abkühlwalze geführt und schließlich aufgewickelt. Die Dicke der getrockneten Beschichtung beträgt vorzugsweise mindestens 1 $\mu$m, insbesondere 1 bis 50 $\mu$m, besonders bevorzugt 2 bis 30 $\mu$m oder 5 bis 30 $\mu$m.

Die Barriereschicht kann sich auf mindestens einer der Verpackungsoberflächen befinden. Sie kann auch mindestens eine von mehreren Schichten einer mehrschichtigen Verpackungsbeschichtung bilden oder sie kann sich als Beschichtung auf mindestens einer Seite eines in der Verpackung befindlichen Innenbeutels befinden. Die Barrierebeschichtung kann direkt auf eine Oberfläche des Trägermaterials aufgebracht werden, zwischen dem Träger und der Barrierebeschichtung können sich jedoch auch noch andere Schichten befinden, z. B. Primerschichten, weitere Barriereschichten oder farbige oder schwarz-weiße Druckfarbenschichten. Die Barriereschicht befindet sich vorzugsweise auf der inneren, dem Verpackungsgut zugewandten Seite der Verpackung.

Der Innenbeutel ist vorzugsweise aus einer Polymerfolie hergestellt. Das Material des Innenbeutels ist vorzugsweise ausgewählt aus Polyolefinen, vorzugsweise Polyethylen oder orientiertem Polypropylen, wobei das Polyethylen sowohl nach dem Hochdruck- als auch nach dem Niederdruckpolymerisationsverfahren von Ethylen hergestellt worden sein kann. Um die Haftung auf einer Folie noch zu verbessern, kann die Trägerfolie zuvor einer Corona-Behandlung unterworfen werden. Andere geeignete Trägerfolien sind beispielsweise Folien aus Polyester, wie Polyethylenterephthalat, Folien aus Polyamid, Polystyrol und Polyvinylchlorid. In einer Ausführungsform handelt es sich bei dem Trägermaterial um biologisch abbaubare Folien, z.B. aus biologisch abbaubaren aliphatisch-aromatischen Copolyestern und/oder Polymilchsäure, beispielsweise Ecoflex® - oder Ecovio®-Folien. Geeignete Copolyester sind z.B. gebildet aus Alkandiolen, insbesondere C2- bis C8-Alkandiolen wie z.B. 1,4-Butandiol, aus aliphatischen Dicarbonsäuren, insbesondere C2- bis C8-Dicarbonsäuren wie z.B. Adipinsäure und aus aromatischen Dicarbonsäuren wie z.B. Terephthalsäure.

Die Dicke der Trägerfolien liegt im Allgemeinen in dem Bereich von 10 bis 200 $\mu$m.

Um spezielle Oberflächen- oder Beschichtungseigenschaften der Folien und Verpackungsmittel zu erhalten, beispielsweise eine gute Bedruckbarkeit, noch besseres Barriere- oder Blockverhalten, gute Wasserbeständigkeit, kann es vorteilhaft sein, die beschichteten Substrate mit Deckschichten zu überschichten, die diese gewünschten Eigenschaften zusätzlich verleihen oder die Barrierebeschichtung einer Coronabehandlung zu unterwerfen. Die erfindungsgemäß vorbeschichteten Substrate zeigen eine gute Überbeschichtbarkeit. Es kann erneut nach einem oben angeführten Verfahren überbeschichtet oder in einem kontinuierlichen Prozess ohne zwischenzeitliches Auf- und Abwickeln z.B. der Folie oder des Papiers gleichzeitig mehrfach beschichtet werden, z.B. unter Verwendung eines Vorhangbeschichters. Die erfindungsgemäße Barriereschicht befindet sich dadurch im Inneren des Systems, die Oberflächeneigenschaften werden dann von der Deckschicht bestimmt. Die Deckschicht hat eine gute Haftung zur Barriereschicht.

Gegenstand der Erfindung ist auch ein Verfahren zur Herstellung einer Verpackung, wobei eine Zusammensetzung in Form einer oben beschriebenen wässrigen Polymerdispersion zur Verfügung gestellt und auf ein Verpackungssubstrat oder auf die Oberfläche eines Innenbeutels aufgebracht und getrocknet wird, wobei die wässrige Polymerdispersion mindestens die oben beschriebenen Polymere A und B enthält und optional weitere Polymere enthalten kann.

Gegenstand der Erfindung ist auch die Verwendung einer wässrigen Polymerdispersion enthaltend mindestens die oben beschriebenen Polymere A und B zur Herstellung einer Barriereschicht gegen flüchtige Mineralölbestandteile, insbesondere zur Herstellung von Verpackungen, insbesondere von Verpackungen für Lebensmittel.

Die erfindungsgemäß beschichteten Substrate zeigen eine hervorragende Barrierewirkung gegen flüchtige Mineralölbestandteile. Die beschichteten Substrate können als solche als Verpackungsmittel verwendet werden. Die Beschichtungen haben sehr gute mechanische Eigenschaften, und zeigen z.B. gutes Blockverhalten.

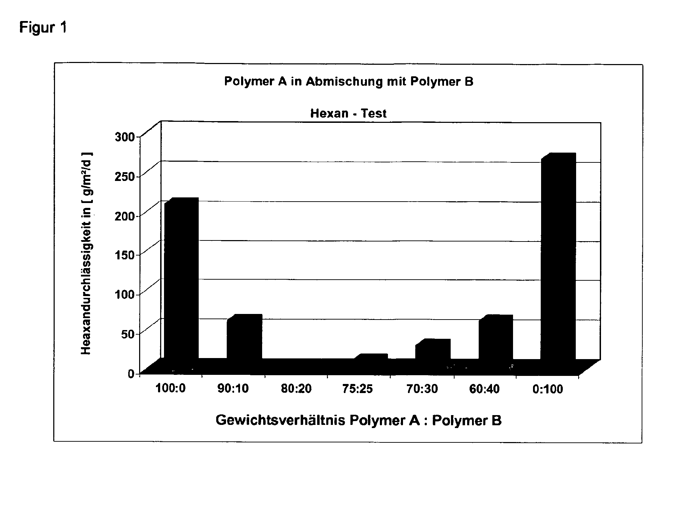

Figur 1 ist eine graphische Darstellung der Barrierewirkung bestimmter Polymermischungen.

Beispiele

Sofern sich aus dem Zusammenhang nichts anderes ergibt, bedeuten die Angaben in Prozent immer Gewichtsprozent. Die Angabe eines Gehalts bezieht sich auf den Gehalt in wässriger Lösung oder Dispersion.

Es wurden die folgenden Einsatzstoffe verwendet:

DINP    Diisononylphtalat
MMA    Methylmethacrylat
MA    Methylacrylat

AS    Acrylsäure
S     Styrol
nBA   n-Butylacrylat
AN    Acrylnitril
Bu    Butadien

Test auf Fettbarriere

Zur Untersuchung der Fettbarriere wurde ein 10x10 cm großes Löschpapierblatt mit dem jeweiligen Polymer beschichtet und mit einem Testfett bzw. Testöl (z.B. 2 ml Ölsäure) in Kontakt gebracht. Gewertet wird die Fläche des durchgefetteten Feldes nach bis zu 16 Stunden bei 60°C. Je nach Qualität wird nach x Stunden der Durchschlag bewertet.

Barrieretest gegen gasförmige Mineralölbestandteile (Testmethode 1)

In einem Versuchsaufbau wurden übereinander gepackt:

1. Donor: Papier von 30g/m$^2$ beladen mit 1 % Gravex 913 (Shell, Mineralöl für Druckfarben)
2. Spacer-Papier zum Ausschluss eines benetzenden Kontaktes, 30g/m$^2$
3. Das zu testende Barrierematerial
4. Akzeptor: handelsübliche PE-Folie 20$\mu$m, LLDPE mit Dichte 0.915 g/cm$^3$

Dieses Paket (Grundmaße 10x10cm) wurde allseitig mit Aluminiumfolie umhüllt.

Das Versuchssystem wurde bei 60 °C gelagert und durch periodisches Abschneiden eines Streifens der Akzeptorfolie, Extraktion mit n-Hexan 2 h/25°C und Messung des Gehaltes an Mineralölbestandteilen mit Kohlenstoffzahl 15-25 durch on-line HPLC-GC untersucht. Es wurde die Durchbruchszeit für den Durchbruch der Mineralölbestandteile durch das Barrierematerial bestimmt. Die Durchbruchszeit ist die Zeit, nach der erstmals in dem Extrakt Mineralölbestandteile oberhalb der Nachweisgrenze detektiert werden.

Barrieretest gegen gasförmige Mineralölbestandteile (Testmethode 2)

In ein Gefäß mit einem Schwamm werden 9 ml Hexan gegeben und mit einem Deckel verschlossen, welcher eine Öffnung und einen Dichtungsring (Inndurchmesser 63 mm) aufweist. Die Öffnung ist fest mit dem zu testenden Barrierematerial verschlossen, wobei das Barrierematerial nicht mit dem mit Hexan getränktem Schwamm in Berührung kommt. Es wird die Gewichtsabnahme des Gefäßes gemessen. Die Gewichtsabnahme ist ein Maß für das über die Gasphase durch das Barrierematerial austretende Hexan und somit ein Maß für die Güte der Barrierewirkung gegen gasförmige Mineralölbestandteile. Die Gewichtsabnahme in Gramm wird umgerechnet auf 1 m$^2$ Papierfläche und dann als g/m$^2$ d angegeben (pro Tag ).

Beispiel 1:

Vergleichstest Fettbarriere / Barriere gegen gasförmige Mineralölbestandteile

Für die in Tabelle 1 aufgeführten Polymere wurden die Barrierewirkung gegen Fette und Öle, d.h. gegen Fettsäuren und Fettsäureester (Fettbarriere) und die Barriere gegen gasförmige Mineralölbestandteile, d.h. gegen flüchtige Kohlenwasserstoffe (im Folgenden Mineralölbarriere) nach Test 1 untersucht. Die Ergebnisse sind in Tabelle 1 zusammengefasst.

Tabelle 1: Barrierewirkungen bestimmter Polymere

| Polymer | Testfett/-öl | Fettbarriere | Mineralölbarriere |
|---|---|---|---|
| aromatisch/aliphatisches, amorphes Polyester-Polyurethan | DINP | + keine Penetration | - Durchbruch < 4d |
| aliphatisches, teilkristallines Polyester-Polyurethan | DINP | + keine Penetration | - Durchbruch < 4d |
| MMA/MA/AS Copolymer Tg ca. 50°C | DINP Ölsäure | - Fläche teilweise durchgefettet | + keine Penetration |

(fortgesetzt)

| Polymer | Testfett/-öl | Fettbarriere | Mineralölbarriere |
|---|---|---|---|
| aromatisch/aliphatisches, teilkri-stallines Polyester-Polyurethan | DINP | + keine Penetration | - Durchbruch < 4d |
| Polyethylenfolie | DINP Ölsäure | + keine Penetration | - Durchbruch < 1d |
| S/nBA/AN/AS Copolymer, Tg 5°C | Ölsäure | + keine Penetration | - Durchbruch < 4d |
| S/Butadien/AS Copolymer, Tg 20°C | Ölsäure | - vollständig durchgefettet | - keine Hexanbarriere (Test 2) |

Die Ergebnisse zeigen, dass von Beschichtungen mit Fettbarrierewirkung nicht auf eine Wirksamkeit als Barriere gegen gasförmige Mineralölbestandteile geschlossen werden kann.

Beispiel 2: Herstellung von Polymerdispersionen

In einen Reaktor nach Spülen mit Stickstoff 450,0 g entmineralisiertes Wasser und 3,0 g Emulgator (Disponil® LDBS 20, 20%ig in Wasser) vorlegen. Die Mischung in der Vorlage wird auf 70-90°C aufgeheizt. Anschließend werden 21,43 g Natriumperoxodisulfat (7%ig) zugegeben und 50 Minuten gerührt. Innerhalb von 2 Stunden den Emulsionszulauf bestehend aus 240,0 g Wasser, 26,67 g Emulgator (Dowfax 2A1, 45%ig in Wasser) und 600,0 g Monomermischung gemäß Tabelle 2 in den Reaktor dosieren. Nach Ende des Emulsionszulaufs 45 min nachpolymerisieren. Dann wird der Reaktor auf Raumtemperatur gekühlt. Feststoffgehalt: ca.45%

Tabelle 2: Copolymerzusammensetzungen, Mengenangaben in Gew.%

| Beispiel | Monomere | Tg [°C] |
|---|---|---|
| A | 55% MA/44% MMA/1% AS | ca. 50 |
| B | 14% S/69% nBA/14%AN/3%AS | 5 |

Beispiel 3: Vergleichstest Barriere gegen gasförmige Mineralölbestandteile

Verschiedene Barrierematerialien wurden mit Testmethode 2 auf die Güte der Barrierewirkung gegen gasförmige Mineralölbestandteile getestet. Die Ergebnisse sind Tabelle 3 zusammengefasst.

Tabelle 3: Barrierewirkungen bestimmter Polymermischungen

| Beispiel | Polymerverhältnis A:B [Gew.-Teile] | Tg Mittelwert [°C] | Hexan Permeation [g m$^2$ d] |
|---|---|---|---|
| 3-1 | 100:0 | ca. 50 | 209 |
| 3-2 | 90:10 | 37 | 62 |
| 3-3 | 80:20 | 32 | 5 |
| 3-4 | 75:25 | 30 | 12 |
| 3-5 | 70:30 | 28 | 31 |
| 3-6 | 60:40 | 23 | 62 |
| 3-7 | 0:100 | 5 | 268 |

Die in Figur 1 graphisch dargestellten Ergebnisse zeigen, dass die erfindungsgemäßen Beispiele 3-2 bis 3-6 (Polymermischungen) gegenüber den Beispielen 3-1 und 3-7 mit den reinen Polymeren deutlich verbesserte Barriereeigenschaften gegen gasförmige Mineralölbestandteile aufweisen.

**Patentansprüche**

1.  Verpackung aus Papier oder Karton, wobei die Verpackung zumindest zum Teil aus mineralölbelastetem, recyceltem Papier hergestellt ist und wobei die Verpackung mindestens eine Barriereschicht aufweist, welche herstellbar ist durch Auftragen einer wässrigen Polymerdispersion enthaltend eine Mischung aus mindestens zwei Polymeren A und B, wobei Polymer A ein Copolymer ist, welches herstellbar ist durch Emulsionspolymerisation aus

    (a) einem oder mehreren Hauptmonomeren, welche ausgewählt sind aus der Gruppe bestehend aus C1- bis C4-Alkyl(meth)acrylaten,
    (b) 0,1 bis 5 Gew.% eines oder mehreren Säuremonomeren,
    (c) 0-20 Gew.% Acrylnitril und
    (d) 0 bis 10 Gew.% weiteren, von den Monomeren (a) bis (c) verschiedenen Monomeren,
    wobei die Glasübergangstemperatur des Polymers A größer als +45 °C ist,
    und wobei die Glasübergangstemperatur von Polymer B kleiner als +10 °C ist, wobei der aus den Glasübergangstemperaturen der einzelnen Polymere berechnete Mittelwert im Bereich von +10 bis +45 °C liegt,
    wobei sich die Barriereschicht auf mindestens einer der Verpackungsoberflächen befinden kann oder die Barriereschicht mindestens eine von mehreren Schichten einer mehrschichtigen Verpackungsbeschichtung bilden kann oder sich die Barriereschicht als Beschichtung auf mindestens einer Seite eines in der Verpackung befindlichen Innenbeutels befinden kann.

2.  Verpackung nach dem vorhergehenden Anspruch, **dadurch gekennzeichnet, dass** das Copolymer A zu mindestens 70 Gew.% aus den Hauptmonomeren (a) aufgebaut ist.

3.  Verpackung nach einem der vorhergehenden Ansprüche, **dadurch gekennzeichnet, dass** die Hauptmonomeren (a) ausgewählt sind aus der Gruppe bestehend aus Methylacrylat und Methylmethacrylat.

4.  Verpackung nach einem der vorhergehenden Ansprüche, **dadurch gekennzeichnet, dass** das Copolymer A herstellbar ist aus

    (a) 79,5 bis 99,5 Gew.% einem oder mehreren Hauptmonomeren, welche ausgewählt sind aus der Gruppe bestehend aus C1- bis C4-Alkyl(meth)acrylaten,
    (b) 0,5 bis 5 Gew.% einem oder mehreren Säuremonomeren ausgewählt aus Acrylsäure und Methacrylsäure,
    (c) 0-20 Gew.% Acrylnitril und
    keinen weiteren, von den Monomeren (a) bis (c) verschiedenen Monomeren.

5.  Verpackung nach einem der vorhergehenden Ansprüche, **dadurch gekennzeichnet, dass** der aus den Glasübergangstemperaturen der einzelnen Polymere berechnete Mittelwert im Bereich von +15 bis +40 °C liegt.

6.  Verpackung nach einem der vorhergehenden Ansprüche, **dadurch gekennzeichnet, dass** die Glasübergangstemperatur des Polymers A im Bereich von 46 bis 80 °C und die Glasübergangstemperatur des Polymers B im Bereich von -10 bis +9 °C liegt, wobei das Mengenverhältnis der Polymere A und B so gewählt ist, dass der aus den Glasübergangstemperaturen der einzelnen Polymere berechnete Mittelwert im Bereich von +15 bis +40 °C liegt.

7.  Verpackung nach einem der vorhergehenden Ansprüche, **dadurch gekennzeichnet, dass** die weiteren Monomere (d) ausgewählt sind aus der Gruppe bestehend aus C5- bis C20-Alkyl(meth)acrylaten, Vinylestern von bis zu 20 C-Atome enthaltenden Carbonsäuren, Vinylaromaten mit bis zu 20 C-Atomen, von Acrylnitril verschiedenen ethylenisch ungesättigten Nitrilen, Vinylhalogeniden, Vinylethern von 1 bis 10 C-Atome enthaltenden Alkoholen, aliphatischen Kohlenwasserstoffen mit 2 bis 8 C-Atomen und ein oder zwei Doppelbindungen und Mischungen dieser Monomeren.

8.  Verpackung nach einem der vorhergehenden Ansprüche, **dadurch gekennzeichnet, dass** die Polymermischung in Kombination mit bis zu 1 Gew.-Teil an plättchenförmigen Pigmenten auf 1 Gew.-Teil Polymere eingesetzt wird.

9.  Verpackung nach einem der vorhergehenden Ansprüche, **dadurch gekennzeichnet, dass** die Beschichtung mit der Polymermischung eine Durchlässigkeit für gasförmiges n-Hexan von weniger als 50 g/m$^2$ d bei 23°C und einem Auftraggewicht von 20 bis 25 g/m$^2$ auf Papier hat.

10. Verpackung nach einem der vorhergehenden Ansprüche, **dadurch gekennzeichnet, dass** die Polymermischung in der wässrigen Polymerdispersion in einer Menge von 15 bis 75 Gew.-%, bevorzugt von 40 bis 60 Gew.-% enthalten ist.

11. Verpackung nach einem der vorhergehenden Ansprüche, **dadurch gekennzeichnet, dass** das Polymer B herstellbar ist aus

    (a) 50 bis 90 Gew.%, vorzugsweise 70 bis 90 Gew.% Acrylatmonomeren, welche ausgewählt sind aus der Gruppe bestehend aus C1- bis C20-Alkyl(meth)acrylaten, vorzugsweise C1- bis C10-Alkyl(meth)acrylaten;
    (b) 0,1 bis 10 Gew.%, vorzugsweise 1 bis 5 Gew.% eines oder mehreren Säuremonomeren, vorzugsweise Acrylsäure, Methacrylsäure oder deren Gemisch;
    (c) 0 bis 20 Gew.%, vorzugsweise 5 bis 20 Gew.% Vinylaromaten, z.B. Styrol;
    (d) 0 bis 20 Gew.%, vorzugsweise 5 bis 20 Gew.% (Meth)acrylnitril, vorzugsweise Acrylnitril und
    (e) 0 bis 10 Gew.% weiteren, von den Monomeren (a) bis (d) verschiedenen Monomeren.

12. Verpackung nach einem der vorhergehenden Ansprüche, **dadurch gekennzeichnet, dass** die Mineralölbelastung aus Druckfarben stammt und flüchtige Paraffine, flüchtige Naphtene und/oder flüchtige aromatische Kohlenwasserstoffe umfasst.

13. Verpackung nach einem der vorhergehenden Ansprüche, **dadurch gekennzeichnet, dass** sich die Barriereschicht als Beschichtung auf mindestens einer Seite eines in der Verpackung befindlichen Innenbeutels befindet und das Material des Innenbeutels ausgewählt ist aus Polyolefinen, vorzugsweise Polyethylen oder orientiertem Polypropylen.

14. Verpackung nach einem der vorhergehenden Ansprüche, **dadurch gekennzeichnet, dass** die Barriereschicht eine Dicke von 2 bis 30 $\mu$m aufweist.

15. Verfahren zur Herstellung einer Verpackung gemäß Anspruch 1, wobei eine Zusammensetzung in Form einer wässrigen Polymerdispersion zur Verfügung gestellt und auf ein Verpackungssubstrat oder auf die Oberfläche eines Innenbeutels aufgebracht und getrocknet wird, wobei die wässrige Polymerdispersion eine Polymermischung mit den auf die Polymerdispersion bezogenen Merkmalen gemäß mindestens einem der Ansprüche 1 bis 11 enthält.

16. Verwendung einer wässrigen Polymerdispersion enthaltend mindestens eine Polymermischung mit den auf die Polymerdispersion bezogenen Merkmalen gemäß mindestens einem der Ansprüche 1 bis 11 zur Herstellung einer Barriereschicht gegen flüchtige Mineralölbestandteile.

**Claims**

1. Paper or cardboard packaging produced at least partly from mineral oil contaminated, recycled paper, wherein the packaging includes at least one barrier layer obtainable by applying an aqueous polymeric dispersion comprising a mixture of at least two polymers A and B, wherein polymer A is a copolymer obtainable by emulsion polymerization of

    (a) one or more principal monomers selected from the group consisting of $C_1$-$C_4$ alkyl (meth)acrylates,
    (b) 0.1 to 5 wt% of one or more acid monomers,
    (c) 0-20 wt% of acrylonitrile and
    (d) 0 to 10 wt% of further monomers other than the monomers (a) to (c),
    wherein the glass transition temperature of polymer A is greater than +45°C,
    and wherein the glass transition temperature of polymer B is smaller than +10°C, wherein the mean value calculated from the glass transition temperatures of the individual polymers is in the range from +10 to +45°C, wherein the barrier layer may be situated on one or more of the surfaces of the packaging, or the barrier layer may form at least one of multiple layers of a multilayered packaging coating or the barrier layer may be situated as a coating on at least one side of an inner bag situated within the packaging.

2. The packaging according to the preceding claim wherein the copolymer A is constructed of the principal monomers (a) to an extent of at least 70 wt%.

3. The packaging according to either preceding claim wherein the principal monomers (a) are selected from the group consisting of methyl acrylate and methyl methacrylate.

4. The packaging according to any preceding claim wherein the copolymer A is obtainable from

(a) 79.5 to 99.5 wt% of one or more principal monomers selected from the group consisting of $C_1$-$C_4$ alkyl (meth)acrylates,
(b) 0.5 to 5 wt% of one or more acid monomers selected from acrylic acid and methacrylic acid,
(c) 0-20 wt% of acrylonitrile, and no further monomers other than the monomers (a) to (c).

5. The packaging according to any preceding claim wherein the mean value calculated from the glass transition temperatures of the individual polymers is in the range from +15 to +40°C.

6. The packaging according to any preceding claim wherein the glass transition temperature of polymer A is in the range from 46 to 80°C and the glass transition temperature of polymer B is in the range from -10 to +9°C, wherein the quantitative ratio of polymers A and B is chosen such that the mean value calculated from the glass transition temperatures of the individual polymers is in the range from +15 to +40°C.

7. The packaging according to any preceding claim wherein the further monomers (d) are selected from the group consisting of $C_5$-$C_{20}$ alkyl (meth)acrylates, vinyl esters of carboxylic acid comprising up to 20 carbon atoms, vinylaromatics having up to 20 carbon atoms, ethylenically unsaturated nitriles other than acrylonitrile, vinyl halides, vinyl ethers of alcohols comprising 1 to 10 carbon atoms, aliphatic hydrocarbons having 2 to 8 carbon atoms and one or two double bonds and mixtures thereof.

8. The packaging according to any preceding claim wherein the polymer mixture is used in combination with up to 1 part by weight of platelet-shaped pigments per 1 part by weight of copolymer.

9. The packaging according to any preceding claim wherein the coating with the polymer mixture has a permeability to gaseous n-hexane of less than 50 $g/m^2$ d at 23°C and a coat weight of 20 to 25 $g/m^2$ on paper.

10. The packaging according to any preceding claim wherein the polymer mixture is comprised in aqueous polymer dispersion in an amount of 15 to 75 wt% and preferably of 40 to 60 wt%.

11. The packaging according to any preceding claim wherein the polymer B is obtainable from

(a) 50 to 90 wt% and preferably 70 to 90 wt% of acrylate monomers selected from the group consisting of $C_1$-$C_{20}$ alkyl (meth)acrylates and preferably $C_1$-$C_{10}$ alkyl (meth)acrylates;
(b) 0.1 to 10 wt% and preferably 1 to 5 wt% of one or more acid monomers, preferably acrylic acid, methacrylic acid or their mixture;
(c) 0 to 20 wt% and preferably 5 to 20 wt% of vinylaromatics, e.g., styrene;
(d) 0 to 20 wt% and preferably 5 to 20 wt% of (meth)acrylonitrile, preferably acrylonitrile, and
(e) 0 to 10 wt% of further monomers other than the monomers (a) to (d).

12. The packaging according to any preceding claim wherein the mineral oil contamination comes from printing inks and comprises volatile paraffins, volatile naphthenes and/or volatile aromatic hydrocarbons.

13. The packaging according to any preceding claim wherein the barrier layer is situated as a coating on at least one side of an inner bag situated in the packaging and the material of the inner bag is selected from polyolefins, preferably polyethylene or oriented polypropylene.

14. The packaging according to any preceding claim wherein the barrier layer is from 2 to 30 $\mu$m in thickness.

15. A process for producing packaging according to claim 1, which process comprises a composition in the form of an aqueous polymeric dispersion being provided and applied to a packaging substrate or to the surface of an inner bag and dried, wherein the aqueous polymeric dispersion comprises a polymer mixture having the polymeric dispersion features according to one or more of claims 1 to 11.

16. The use of an aqueous polymeric dispersion comprising at least one polymer mixture having the polymeric dispersion features according to one or more of claims 1 to 11 for producing a barrier layer against volatile mineral oil constituents.

**Revendications**

1. Emballage en papier ou en carton, l'emballage étant fabriqué au moins en partie à partir de papier recyclé, chargé en huiles minérales, et l'emballage comprenant au moins une couche de barrière, qui peut être fabriquée par application d'une dispersion aqueuse de polymères contenant un mélange d'au moins deux polymères A et B, le polymère A étant un copolymère qui peut être fabriqué par polymérisation en émulsion à partir de

   (a) un ou plusieurs monomères principaux, qui sont choisis dans le groupe constitué par les (méth)acrylates d'alkyle en C1 à C4,
   (b) 0,1 à 5 % en poids d'un ou de plusieurs monomères acides,
   (c) 0 à 20 % en poids d'acrylonitrile et
   (d) 0 à 10 % en poids de monomères supplémentaires, différents des monomères (a) à (c),
   la température de transition vitreuse du polymère A étant supérieure à +45 °C,
   et la température de transition vitreuse du polymère B étant inférieure à +10 °C, la valeur moyenne calculée à partir des températures de transition vitreuse des polymères individuels se situant dans la plage allant de +10 à +45 °C,
   la couche de barrière pouvant se trouver sur au moins une des surfaces de l'emballage ou la couche de barrière pouvant former au moins une de plusieurs couches d'un revêtement multicouche de l'emballage ou la couche de barrière pouvant se trouver en tant que revêtement sur au moins un côté d'une poche intérieure se trouvant dans l'emballage.

2. Emballage selon la revendication précédente, **caractérisé en ce que** le copolymère A est constitué à hauteur d'au moins 70 % en poids des monomères principaux (a).

3. Emballage selon l'une quelconque des revendications précédentes, **caractérisé en ce que** les monomères principaux (a) sont choisis dans le groupe constitué par l'acrylate de méthyle et le méthacrylate de méthyle.

4. Emballage selon l'une quelconque des revendications précédentes, **caractérisé en ce que** le copolymère A peut être fabriqué à partir de

   (a) 79,5 à 99,5 % en poids d'un ou de plusieurs monomères principaux, qui sont choisis dans le groupe constitué par les (méth)acrylates d'alkyle en C1 à C4,
   (b) 0,5 à 5 % en poids d'un ou de plusieurs monomères acides choisis parmi l'acide acrylique et l'acide méthacrylique,
   (c) 0 à 20 % en poids d'acrylonitrile et aucun monomère supplémentaire, différent des monomères (a) à (c).

5. Emballage selon l'une quelconque des revendications précédentes, **caractérisé en ce que** la valeur moyenne calculée à partir des températures de transition vitreuse des polymères individuels se situe dans la plage allant de +15 à +40 °C.

6. Emballage selon l'une quelconque des revendications précédentes, **caractérisé en ce que** la température de transition vitreuse du polymère A se situe dans la plage allant de 46 à 80 °C et la température de transition vitreuse du polymère B se situe dans la plage allant de -10 à +9 °C, le rapport entre les quantités des polymères A et B étant choisi de sorte que la valeur moyenne calculée à partir des températures de transition vitreuse des polymères individuels se situe dans la plage allant de +15 à +40 °C.

7. Emballage selon l'une quelconque des revendications précédentes, **caractérisé en ce que** les monomères supplémentaires (d) sont choisis dans le groupe constitué par les (méth)acrylates d'alkyle en C5 à C20, les esters de vinyle d'acides carboxyliques contenant jusqu'à 20 atomes C, les composés aromatiques de vinyle contenant jusqu'à 20 atomes C, les nitriles éthyléniquement insaturés différents de l'acrylonitrile, les halogénures de vinyle, les éthers de vinyle d'alcools contenant de 1 à 10 atomes C, les hydrocarbures aliphatiques contenant 2 à 8 atomes C et une ou deux doubles liaisons et les mélanges de ces monomères.

8. Emballage selon l'une quelconque des revendications précédentes, **caractérisé en ce que** le mélange de polymères est utilisé en combinaison avec jusqu'à 1 partie en poids de pigments plaquettaires pour 1 partie en poids de polymères.

9. Emballage selon l'une quelconque des revendications précédentes, **caractérisé en ce que** le revêtement avec le mélange de polymères présente une perméabilité pour le n-hexane gazeux de moins de 50 g/m$^2$ à 23 °C et un poids de revêtement de 20 à 25 g/m$^2$ sur le papier.

10. Emballage selon l'une quelconque des revendications précédentes, **caractérisé en ce que** le mélange de polymères est contenu dans la dispersion aqueuse de polymères en une quantité de 15 à 75 % en poids, de préférence de 40 à 60 % en poids.

11. Emballage selon l'une quelconque des revendications précédentes, **caractérisé en ce que** le polymère B peut être fabriqué à partir de

(a) 50 à 90 % en poids, de préférence 70 à 90 % en poids, de monomères d'acrylate, qui sont choisis dans le groupe constitué par les (méth)acrylates d'alkyle en C1 à C20, de préférence les (méth)acrylates d'alkyle en C1 à C10 ;
(b) 0,1 à 10 % en poids, de préférence 1 à 5 % en poids, d'un ou de plusieurs monomères acides, de préférence l'acide acrylique, l'acide méthacrylique ou leur mélange ;
(c) 0 à 20 % en poids, de préférence 5 à 20 % en poids, de composés aromatiques de vinyle, p. ex. le styrène ;
(d) 0 à 20 % en poids, de préférence 5 à 20 % en poids, de (méth)acrylonitrile, de préférence d'acrylonitrile ; et
(e) 0 à 10 % en poids de monomères supplémentaires, différents des monomères (a) à (d).

12. Emballage selon l'une quelconque des revendications précédentes, **caractérisé en ce que** le chargement en huiles minérales provient d'encres d'impression et comprend des paraffines volatiles, des naphtènes volatils et/ou des hydrocarbures aromatiques volatils.

13. Emballage selon l'une quelconque des revendications précédentes, **caractérisé en ce que** la couche de barrière se trouve en tant que revêtement sur au moins un côté d'une poche intérieure se trouvant dans l'emballage et le matériau de la poche intérieure est choisi parmi les polyoléfines, de préférence le polyéthylène ou le polypropylène orienté.

14. Emballage selon l'une quelconque des revendications précédentes, **caractérisé en ce que** la couche de barrière présente une épaisseur de 2 à 30 μm.

15. Procédé de fabrication d'un emballage selon la revendication 1, dans lequel une composition sous la forme d'une dispersion aqueuse de polymères est préparée et appliquée sur un substrat d'emballage ou sur la surface d'une poche intérieure et séchée, la dispersion aqueuse de polymères contenant un mélange de polymères qui présente les caractéristiques relatives à la dispersion de polymères selon au moins l'une quelconque des revendications 1 à 11.

16. Utilisation d'une dispersion aqueuse de polymères contenant au moins un mélange de polymères qui présente les caractéristiques relatives à la dispersion de polymères selon au moins l'une quelconque des revendications 1 à 11 pour la fabrication d'une couche de barrière contre les constituants volatils d'huiles minérales.

Figur 1

Polymer A in Abmischung mit Polymer B

Hexan - Test

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2006053849 A

**In der Beschreibung aufgeführte Nicht-Patentliteratur**

- **T.G. FOX.** *Bull. Am. Phys. Soc.,* 1956, vol. 1, 123
- Ullmann's Encyclopädie der technischen Chemie. Verlag Chemie, 1980, vol. 19, 18
- Ullmann's Ecyclopedia of Industrial Chemistry. VCH, 1992, vol. A21, 169
- **J. BRANDRUP ; E.H. IMMERGUT.** Polymer Handbook. J. Wiley, 1966
- POLYMER HANDBOOK. J.Wiley, 1975
- POLYMER HANDBOOK. J. Wiley, 1989
- **W. MÄCHTLE.** *Makromolekulare Chemie,* 1984, vol. 185, 1025-1039
- Methoden der organischen Chemie. **HOUBEN-WEYL.** Makromolekulare Stoffe. Georg-Thieme-Verlag, 1961, vol. XIV/1, 411-420